(19) Europäisches Patentamt
European Patent Office
Office européen des brevets

(11) **EP 2 947 439 B1**

(12) **EUROPÄISCHE PATENTSCHRIFT**

(45) Veröffentlichungstag und Bekanntmachung des Hinweises auf die Patenterteilung:
**23.08.2017   Patentblatt 2017/34**

(51) Int Cl.:
**G01K 15/00** *(2006.01)*        **G05D 23/00** *(2006.01)*

(21) Anmeldenummer: **15161989.7**

(22) Anmeldetag: **31.03.2015**

(54) **VERFAHREN UND VORRICHTUNG ZUR REGELUNG DER TEMPERATUR DES KALIBRIERVOLUMENS EINER EINRICHTUNG ZUM VERGLEICHENDEN KALIBRIEREN VON TEMPERATURSENSOREN**

METHOD AND DEVICE FOR CONTROLLING THE TEMPERATURE OF THE CALIBRATING VOLUME OF A DEVICE FOR COMPARATIVE CALIBRATING OF TEMPERATURE SENSORS

PROCÉDÉ ET DISPOSITIF DE RÉGLAGE DE LA TEMPÉRATURE D'UN VOLUME D'ÉTALONNAGE D'UN DISPOSITIF DESTINÉ À L'ÉTALONNAGE COMPARATIF DE CAPTEURS DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014   DE 102014007786**

(43) Veröffentlichungstag der Anmeldung:
**25.11.2015   Patentblatt 2015/48**

(73) Patentinhaber: **SIKA Dr.Siebert & Kühn GmbH & Co. KG.**
**34260 Kaufungen (DE)**

(72) Erfinder: **Friedrichs, Dr. René**
**37075 Göttingen (DE)**

(74) Vertreter: **Patentanwälte Walther Hinz Bayer PartGmbB**
**Heimradstrasse 2**
**34130 Kassel (DE)**

(56) Entgegenhaltungen:
**WO-A2-2011/100736        DE-U1- 20 317 566**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung der Temperatur des Kalibriervolumens einer Einrichtung zum vergleichenden Kalibieren von Temperatursensoren auf eine Solltemperatur, wobei die genannte Kalibriereinrichtung Wärmequellen und/oder Wärmesenken aufweist, die über ein Wärmeleitungsteil oder mehrere Wärmeleitungsteile in thermischem Kontakt mit dem Kalibriervolumen stehen, wobei in mindestens einem Verfahrensschritt der wahre thermische Zustand des Kalibrators und der Umgebung unter Verwendung eines Kalman-Filters geschätzt wird, wobei dem Kalman-Filter die Messwerte mehrerer der sich in der genannten Kalibriereinrichtung befindlichen Temperatursensoren zugeführt werden und in mindestens einem weiteren Verfahrensschritt ein zukünftiger thermischer Zustand unter Verwendung eines thermischen Modells der Zustandsdynamik berechnet wird. Gegenstand der Erfindung ist ebenfalls eine Vorrichtung zur Regelung der Temperatur eines Kalibriervolumens einer Einrichtung zum vergleichenden Kalibrieren von Temperatursensoren auf eine Solltemperatur, wobei die Vorrichtung mindestens aus einer elektronischen Datenverarbeitungseinheit besteht, die über eine Schnittstelle Messdaten mindestens eines in der Kalibriereinrichtung befindlichen Temperatursensors empfangen kann.

Die überwiegende Zahl der in Industrie und Forschung eingesetzten Temperatursensoren sind Sekundärthermometer. Das heißt, die entsprechenden Sensoren, wie z.B. Widerstandsthermometer oder Thermoelemente, müssen mindestens vor Ihrer ersten Verwendung und meist auch im Laufe ihres Einsatzes wiederholt kalibriert werden. Dazu werden beim Vergleichsverfahren die zu kalibrierenden temperaturempfindlichen Sensoren oder Schalter in temperaturstabilisierten Öfen oder Bädern mit einem Normalthermometer verglichen. Vorrichtungen, die ein entsprechendes Kalibriervolumen auf eine vorgebbare konstante Solltemperatur temperieren, sind bekannt. Diese sogenannten Temperaturkalibratoren können sowohl als schwere immobile Vorrichtungen oder, wie in der Schrift US 39 39 687 A beschrieben, als kompakte tragbare Kalibratoren ausgeführt werden.

Um eine optimale thermische Ankopplung der Prüflinge an das Kalibrier- bzw. Prüfvolumen zu gewährleisten, können verschiedene auf die zu prüfenden Sensoren angepasste Einsatzhülsen bzw. Prüflingsaufnahmen als Festkörper in das Kalibriervolumen des Temperaturkalibrators eingebracht werden. Zur Kalibrierung von Sensoren mit komplizierten Geometrien, kann das Kalibriervolumen mit flüssigen, gasförmigen oder granularen Kalibriermedien gefüllt sein. Um eine möglichst konstante räumliche Temperaturverteilung innerhalb des Kalibriervolumens zu erreichen, sollte der Einsatz bzw. das Kalibriermedium eine möglichst hohe thermische Leitfähigkeit besitzen. Um einen möglichst konstanten zeitlichen Temperaturverlauf, d.h. eine hohe Temperaturstabilität, zu gewährleisten sollte der Einsatz bzw. das Kalibriermedium eine möglichst hohe Wärmekapazität besitzen.

Da das Kalibriervolumen auf die vom Nutzer vorgegebene Solltemperatur temperiert werden soll, kann über einen thermisch leitfähigen Körper, der das Volumen umgibt, dem Kalibriervolumen Wärme entzogen oder hinzugefügt werden. Dieser Körper ist bei immobilen Kalibratoren typischerweise als Wanne und bei tragbaren Kalibratoren typischerweise als metallischer Block ausgeführt und steht in thermischem Kontakt mit Wärmesenken, wie z.B. als Kühlelemente betriebene Peltier-Elemente, wie in der DE 20 2005 006 710 U1 beschrieben, oder der kälteren Umgebungsluft, und Wärmequellen, wie z.B. einer Widerstandsheizungen oder der wärmeren Umgebungsluft.

Daraus ergibt sich die Frage, mit welcher Intensität bzw. Leistung die einstellbaren Kühl- und Heizelemente (Steuer- bzw. Stellgrößen) betrieben werden müssen, damit die Temperatur des Kalibriervolumens (Regelgröße) möglichst schnell den gewünschten Temperaturwert (Sollwert) erreicht und diesen dann auch bei zeitlichen Änderungen z.B. der Umgebungstemperatur (Störgröße) möglichst stabil hält. Das Regelungstechnische Problem der Einstellung der Steuer- bzw. Stellgrößen in Abhängigkeit von im Kalibriervolumen oder im Wärmeleitungsteil gemessenen Temperaturen (Messgrößen) wird durch die vorliegende Erfindung gelöst.

Ein bekannter Ansatz zur Regelung von Heiz- und Kühlstrecken ist die Verwendung eines oder mehrerer verknüpfter PID-Regler, wie in der Schrift DE 2 023 130 B beschrieben. Ein allgemeiner Nachteil bei der Verwendung von PID-Reglern ist, dass zumindest zum Erreichen einer optimalen Regelperformance, d.h. einer hohen Stabilität der Temperatur des Kalibriervolumens, eine sehr feine Einstellung bzw. komplizierte Bestimmung der Regelparameter notwendig ist. Im Fall der Regelung eines Temperaturkalibrators kommt erschwerend hinzu, dass die optimalen Regelparameter abhängig sind von Umgebungsbedingungen, wie z.B. die Umgebungstemperatur, die Luftfeuchtigkeit oder die Netzspannung. Die Hauptschwierigkeit bei der Regelung von Temperaturkalibratoren ist aber die große Trägheit der Regelstrecke, die sich von den Wärmequellen bzw. Wärmesenken über den Wärmeleitungsteil bis zum Kalibriervolumen erstreckt. So ist aufgrund der hohen Wärmekapazitäten des Wärmeleitungsteils, der als Metallblock ausgeführt sein kann, und des Kalibriervolumens, das als metallische Einsatzhülse ausgeführt sein kann, schon bei relativ langsamen Variationen der Heizleistung mit einer Frequenz von weniger als 0,1 Hz eine Phasenverzögerung der Temperatur des Kalibriervolumens zur Heizleistung von fast $3\pi$ zu beobachten. Dementsprechend ist eine stabile Regelung, die auf Änderungen der Umgebungsbedingungen innerhalb von etwa 10 Sekunden reagiert, mittels eines oder mehrerer PID-Regler nicht oder nur nach einer aufwendigen Bestimmung geeigneter Regelparameter möglich. Dies hat zur Folge, dass die mit zur Zeit am Markt verfügbaren Temperaturkalibratoren erreichbare zeitliche Temperaturstabilität für Solltemperaturen oberhalb von 500°C etwa $\pm30$ mK beträgt und damit fast eine Größenordnung schlechter ist als die für hochgenaue Temperaturkalibrierungen notwendige Stabilität von ±5 mK.

Eine Möglichkeit, sowohl eine hohe Temperaturhomogenität als auch eine zeitliche Temperaturstabilität zu erreichen, ist die in der Schrift WO 2013/113683 A2 beschriebene Integration von einer oder mehrerer Fixpunktzellen in den Block eines Temperaturkalibrators. Nachteilig an der Lösung ist, dass die Konstanz der Temperatur der Fixpunktzelle über den Zeitraum der Phasenumwandlung ausschließlich für die eine Phasenübergangstemperatur der verwendeten Fixpunktzelle gegeben ist. Gleichzeitig sind Fixpunktzellen kostenintensiv, so dass eine Einrichtung zur Kalibrierung an unterschiedlichen jeweils durch entsprechende Fixpunktzellen stabilisierten Temperaturpunkten mit sehr hohen Kosten verbunden wäre.

Das in der Schrift KR 100991021 B1 beschriebene dynamischen Kalibrierverfahren arbeitet ohne aufwendige Temperaturregelung. Stattdessen wird die Temperatur im Kalibriervolumen in der Nähe der zu betrachteten Kalibriertemperatur absichtlich rampenartig abgesenkt bzw. erhöht und der sich ergebende Temperaturversatz zwischen dem Normalthermometer und den Prüflingen über eine Zeitversatzverrechnung kompensiert. Nachteilig an dieser Kalibrierung ist, dass die aus der Kompensation resultierende zusätzliche Messunsicherheit bei der Kalibrierung in der Größenordnung von ±20 bis ±40 mK liegt und damit deutlich größer als die angestrebten ±5 mK ist. Ein weiterer Nachteil des dynamischen Kalibrierverfahrens besteht darin, dass die Kalibrierung nicht an einem Temperaturpunkt durchgeführt wird, sondern in einem Temperaturintervall dessen Ausdehnung nicht vernachlässigt werden kann und dessen Lage relativ zum betrachteten Kalibrierpunkt nicht definiert ist.

Um allerdings die Temperatur besonders stabil und genau zu regeln, ist die Kenntnis der Verteilung der Temperatur bzw. des genauen thermischen Zustandes des gesamten Kalibrierblocks von besonderer Notwendigkeit. Wie unter Verwendung eines Kalman-Filters und mehrerer Temperaturmessstellen in einem Raum in einem Gebäude der thermische Zustand dieses Raumes geschätzt werden kann, ist in der WO2011/100736 A2 beschrieben. Dabei ist die Unsicherheit der beschriebenen Schätzung der Raumtemperatur bestimmt durch die Messunsicherheiten der verwendeten Temperatursensoren einerseits und durch das beschriebene thermische Modell andererseits. Die erreichbare Schätzunsicherheit des dort beschriebenen Verfahrens ist insofern zu groß, um die Temperaturverteilung im Kalibrierblock eines Temperaturkalibrators ausreichend genau berechnen zu können. Um die Temperatur eines Kalibrierblocks besonders genau zu bestimmen, wird in der DE 20317566 U1 vorgeschlagen, als Referenzsensor im Kalibriervolumen ein DKD-Gebrauchsnormal zu verwenden. Nachteilig an dieser Lösung ist, dass damit die Temperatur des Kalibriervolumens nur an der Position des Gebrauchsnormals genau bestimmt werden kann. Diese Temperatur kann aufgrund von äußeren Störungen, aufgrund seitlicher Variationen der eingebrachten Heizleistungen deutlich von den Temperaturen an anderen Positionen im Kalibrierblock abweichen.

Erfindungsgemäß wird zur Regelung der Temperatur des Kalibriervolumens auf eine Solltemperatur ein modellbasiertes Regelverfahren mit den Merkmalen des Anspruchs 1 eingesetzt. Die Erfindung betrifft ebenfalls eine Vorrichtung gemäß Anspruch 5 zur Regelung der Temperatur eines Kalibriervolumens.

Das zur Regelung benötigte Modell der Dynamik der Regelstrecke beinhaltet dabei vorzugsweise Steuer- und Stellgrößen, wie z.B. die Intensität oder Leistung der einstellbaren Kühl- und Heizelemente, Störgrößen, wie z.B. die Umgebungstemperatur oder Variationen der Netzspannung, und Regelgrößen, wie z.B. Temperaturen innerhalb des Kalibriervolumens oder deren zeitliche Änderungen.Das Modell kann als Rechenvorschrift auf einer elektronischen Datenverarbeitungseinheit, z.B. auf einem Mikrocontroller, innerhalb oder außerhalb des Kalibrators implementiert werden. Mit dem dadurch gebildeten Modell können zukünftige Werte der Regelgrößen in Abhängigkeit von möglichen Werten der Stör-, Steuer- und Stellgrößen berechnet werden.

Das Modell kann beispielsweise in Form einer oder mehrerer Übertragungsfunktion vorliegen. Vorteilhaft ist dabei, dass sich die zugehörigen Übertragungsfunktionen leicht messen lassen, da an den relevanten Positionen im Temperaturkalibrator bereits Temperaturmessstellen integriert sind oder sich dort entsprechende Sensoraufnahmen befinden.

Alternativ kann das Modell auch in der Zustandsraumdarstellung vorliegen. Die zugehörigen Modellgleichungen können dann beispielweise aus der bekannten Wärmeleitungsgleichung hergeleitet werden. Da eine Lösung der Wärmeleitungsgleichung für die Geometrie eines realen Temperaturkalibrators in der Regel nur numerisch erfolgen kann und sehr aufwendig ist, ist es vorteilhaft aus der Wärmeleitungsgleichung nur die Struktur der Modellgleichungen abzuleiten und die freien Parameter des Modells mittels einer Messung der Übertragungsfunktionen zu bestimmen.

Im Fall einer zeitkontinuierlichen Modellierung der Zustandsdynamik wird das Modell vorzugsweise als lineares Differenzialgleichungssystem

$$\frac{d\vec{x}(t)}{dt} = A\vec{x}(t) + B\vec{u}(t)$$

formuliert, wobei $\vec{x}(t)$ den Vektor des thermischen Zustandes des Kalibrators und der Umgebung und $\vec{u}(t)$ den Vektor

der Steuer- und Stellgrößen bezeichnet. Die Elemente des Zustandsvektors werden vorzugsweise aus Temperaturen an Positionen im Kalibriervolumen, Temperaturen an Positionen im Wärmeleitungsteil des Kalibrators, Temperaturen in der Umgebung oder innerhalb des Gehäuse des Kalibrators und systematischen Unterschieden in den Temperaturanzeigen von Temperatursensoren gebildet. Des Weiteren kann der Zustandsvektor auch Wärmeströme oder zeitliche Änderungen von Temperaturen umfassen. Die Elemente des Vektors der Steuer- und Stellgrößen werden vorzugsweise aus dem Aktivierungsniveaus oder den Leistungen der Heiz- und Kühlelemente gebildet. Die Werte der Matrizen $A$ und $B$ können beispielsweise durch Messung der zughörigen Übertragungsfunktionen ermittelt werden.

Im Fall einer zeitdiskreten Modellierung der Zustandsdynamik für die Zeitpunkte

$$t_n = t_{n-1} + \theta$$

mit einem geeigneten Zeitinkrement $\theta$ wird das Modell vorzugsweise als lineare Differenzengleichung

$$\vec{x}_n = F \cdot \vec{x}_{n-1} + G \cdot \vec{u}_{n-1}$$

für die Zustände $\vec{x}_n = \vec{x}(t_n)$ formuliert. Dabei werden die Koeffizienten der Matrizen $F$ und $G$ mittels numerischer oder analytischer Integration des genannten Differentialgleichungssystems bevorzugt vor einer Implementierung der Rechenvorschrift berechnet und anschließend auf einem Mikrocontroller oder einer anderen kompakten elektronischen Datenverarbeitungseinheit implementiert. Die resultierende Rechenvorschrift in Form einer linearen Differenzengleichung mit zeitlich konstanten Matrizen bzw. Matrizen mit zeitlich konstanten Koeffizienten kann dadurch sehr schnell ausgeführt werden, so dass das Modell auch für eine schnelle Regelungen des Temperaturkalibrators mit Zeitinkrementen kleiner als 100 ms genutzt werden kann.

In einer bevorzugten Ausführung werden die Koeffizienten der Matrizen $F(T)$ und $G(T)$ in Abhängigkeit von der Temperatur des Kalibriervolumens berechnet und während der Regelung des Kalibriervolumens auf eine Solltemperatur $T_{Soll}$ zur Modellierung der Zustandsdynamik die Matrizen mit zeitlich konstanten Koeffizienten $F(T_{Soll})$ und $G(T_{Soll})$ verwendet. Dadurch wird die in den Temperaturabhängigkeiten von Wärmeleitfähigkeiten und Wärmekapazitäten begründete Nichtlinearität der Zustandsdynamik ausreichend berücksichtigt ohne die Komplexität des Modells zu erhöhen, da die zugehörige Rechenvorschrift weiterhin eine lineare Differenzengleichung mit zeitlich konstanten Koeffizienten ist.

Die Formulierung des Modells als lineare Differenzengleichung für die Zustände $\vec{x}_n = \vec{x}(t_n)$ hat den weiteren Vorteil, dass sie identisch ist mit der Vorhersagegleichung des diskreten Kalman-Filters der vorzugsweise für die Schätzung der Zustände $\vec{x}_n = \vec{x}(t_n)$ verwendet wird. Hierbei wird das Rechenergebnis des Kalman-Filters als Schätzung bezeichnet, weil es nicht nur die eigentlichen Werte für den Zustand sondern auch deren zugehörige Schätzunsicherheit beinhaltet. Die berechneten Schätzunsicherheiten liegen im Fall der für eine Temperaturkalibrierung verwendeten Temperatursensoren typischerweise im Bereich von nur wenigen Millikelvin, so dass im Anwendungsbereich der Erfindung das Schätzergebnis des Kalman-Filters eine ausreichende Genauigkeit zur Regelung der Temperatur des Kalibriervolumens besitzt. Die indirekte Bestimmung einer Temperatur an einer z.B. nur schwer zugänglichen Position in einem Ofen durch Messung einer Temperatur an einer anderen leichter zugänglichen Position durch Verwendung eines Kalman-Filters ist ein bekanntes Verfahren und wurde von Mouzinho *et al.* beschrieben [L. F. Mouzinho, J. V. FonsecaNeto, B. A. Luciano und R. C. S. Freire, "INDIRECT MEASUREMENT OF THE TEMPERATURE VIA KALMAN FILTER", XVIII IMEKO World Congress, Metrology for a Sustainable Development, 17. - 22. September 2006, Rio de Janeiro, Brazil].

Es hat sich herausgestellt, dass zum Erreichen einer hohen Regelgüte der Zustandsvektor eine Vielzahl von Temperaturen an bis zu 20 unterschiedlichen Positionen im Wärmeleitungsteil des Kalibrators, der z.B. aus dem Metallblock eines tragbaren Trockenblockkalibrators gebildet wird, beinhalten muss. Eine Messung der Temperatur an vielen Positionen ist technisch möglich aber entsprechend kostenintensiv. Aus diesem Grund werden bevorzugt nur an einer oder zwei Stellen im Wärmeleitungsteil mittels eines bzw. zweier integrierter interner Referenzsensoren Temperaturen gemessen und daraus mittels des Kalman-Filters die übrigen im Zustandsvektor enthaltenen Temperaturen berechnet. Zusätzlich kann die Schätzung des Temperaturzustandes durch die Verwendung der Temperaturmesswerte von im Kalibriervolumen befindlichen Temperatursensoren verbessert werden. Dazu werden neben den Messwerten der internen Referenzsensoren vorzugsweise auch die Messwerte eines oder mehrerer externer Referenzsensoren dem Kalman-Filter zugeführt.

Es hat sich weiterhin herausgestellt, das eine Anwendung des von Mouzinho *et al.* beschriebenen Kalman-Filters zur Schätzung der Temperaturen an Positionen im Wärmeleitungsteil und im Kalibriervolumen zu Fehlern führen, die in der Größenordnung von einigen 10 mK liegen können. Derartige Abweichungen können zwar für übliche indirekte Temperaturmessungen im industriellen Umfeld vernachlässigt werden, sind aber bei der Regelung von Kalibriereinrichtungen für hochgenaue Temperatursensoren nicht akzeptabel. Diese Abweichungen treten auf sobald Messwerte von mehr als einem Temperatursensor dem Kalman-Filter zugeführt werden und sind in der Tatsache begründet, dass zwei Sensoren aufgrund der Messunsicherheit bei ihrer Kalibrierung kleine aber endliche und insbesondere unterschiedliche systematische Abweichung in den angezeigten Messwerten aufweisen. Zur Regelung eines Temperaturkalibrators können diese Abweichungen selbst bei der Verwendung von hochgenauen rückführbaren Referenzsensoren nicht vernachlässigt werden.

Gemäß der Erfindung werden diese Abweichungen bei der Zustandsschätzung mittels des Kalman-Filters dadurch berücksichtigt, dass ein Temperatursensor im Kalibrator ausgewählt wird und die systematischen Abweichungen der Temperaturanzeigen der übrigen Sensoren relativ zu diesem Bezugssensor als zu schätzende zeitlich konstante Temperaturdifferenzen dem Zustandsvektor hinzugefügt werden. Dies hat zur Folge, dass die durch den Kalman-Filter geschätzten Temperaturwerte im Kalibriervolumen und im Wärmeleitungsteil zwar immer noch einen systematischen Fehler bezogen auf die internationale Temperaturskala aufweisen, dieser Offset aber für alle Temperaturwerte bzw. an allen Positionen gleich ist. Diese Eigenschaft ist von zentraler Bedeutung für die Temperaturregelung, da unterschiedliche systematische Fehler in den Temperaturwerten zu systematisch falschen Wärmeflussvorhersagen und damit auch zu systematisch falschen Temperaturschätzungen führen würden.

Vorzugsweise wird als Bezugssensor der Sensor gewählt, von dem angenommen wird, dass dessen Messwerte die kleinste systematische Messabweichung zur internationale Temperaturskala aufweisen, so dass alle vom Kalman-Filter berechneten Temperaturwerte, diesen systematischen Fehler aufweisen.

In einer Ausführung zur schnellen Kalibrierung von Temperatursensoren, werden auch die Temperaturmesswerte der Prüflinge dem Kalman-Filter zugeführt und die jeweiligen systematischen Abweichungen der Messwerte zum Bezugssensor als zu schätzende Temperaturoffsets dem Zustandsvektor hinzugefügt. Die systematische Abweichung der Prüflingsmesswerte von den Messwerten des Bezugsnormals ist genau der Temperaturoffset der durch den Kalibriervorgang bestimmt werden soll. Dieser interessierende Temperaturoffset wird üblicherweise aufwendig durch Vergleich der Temperaturmesskurven des Prüflings und des Bezugsnormals über einen Zeitraum von typischerweise 30 Minuten nach Erreichen eines stabilen Temperaturniveaus in der Umgebung der Solltemperatur ermittelt. Gemäß der Ausgestaltung der Erfindung nach Patentanspruch 7 steht der vom Kalman-Filter berechnete Temperaturoffset als ein Element des Zustandsvektors jederzeit während des Kalibriervorgangs zur Verfügung und kann direkt ausgelesen bzw. angezeigt werden. Der angezeigte Wert für den Temperaturoffset zwischen Prüfling und Bezugsnormal ist typischerweise schon wenige Minuten nach Erreichen der Solltemperatur ausreichend stabil und entspricht dann dem Offset der Temperaturanzeige des Prüflings relativ zum Bezugsnormal, den man erhält, wenn man die Temperaturmesskurven über einen längeren Zeitraum vergleicht.

Aus der Kenntnis des mittels des Kalman-Filters geschätzten Zustandes des Kalibrators und der Umgebung kann mit dem Modell der Zustandsdynamik berechnet werden, wie die Steuer- und Stellgrößen in Zukunft eingestellt werden müssen, damit das zukünftige Verhalten der Regelgrößen dem angestrebten Verhalten der Regelgrößen möglichst nahe kommt. Diese optimale Einstellung der Steuer- und Stellgrößen resultiert dann in einem optimalen Verhalten der Regelgrößen.

Falls beispielsweise angestrebt wird, dass das Kalibriervolumen in den nächsten 100 Sekunden auf eine Solltemperatur von genau 50°C aufgeheizt werden soll, kann mittels eines zeitkontinuierlichen Modells in Form der genannten linearen Differenzialgleichung berechnet werden welche Temperaturen T0 und T1000 sich einstellen, wenn die Heizleistung in dieser Zeit 0 bzw. 1 kW beträgt. Die optimale Heizleistung in den betrachteten 100 Sekunden beträgt dann aufgrund der Linearität der Differenzialgleichung (50°C-T0)/(T1000-T0)*1kW. Nachteilig an diesem Ansatz ist, dass, sofern die entsprechende Leistung überhaupt einstellbar ist, die gewünschten 50°C zwar genau nach den 100 Sekunden erreicht werden, aber sowohl davor als auch danach deutliche Abweichungen von der Solltemperatur, z.B. in Form von Überschwingern, auftreten können.

Vorzugsweise wird daher das angestrebte Verhalten als minimale mittlere quadratische Abweichung der Regelgrößen von den Sollwerten über einen Zeitraum der Länge $\tau$ statt zu einem einzelnen Zeitpunkt spezifiziert. Um das resultierende quadratische Optimierungsproblem schnell und mit einem ausreichenden Optimierungsergebnis zu lösen, wird vorzugsweise ein zeitdiskretes Modell der Zustandsdynamik in Form einer linearen Differenzengleichung zur Berechnung der resultierenden Regelgrößen verwendet und die Menge der jeweils als einstellbar betrachteten Werte für die Steuer- und Stellgrößen auf eine kleine endliche Anzahl größer als 1 reduziert. Damit wird die Menge der bei der Optimierung zu betrachtenden zeitlichen Abfolgen der Steuer- und Stellgrößen und die Menge der daraus jeweils resultierenden und mittels des Modells zu berechnenden mittleren quadratischen Regelabweichungen endlich.

Es hat sich herausgestellt, dass, um Überschwinger im Temperaturverhalten des Kalibriervolumens zu vermeiden, der Zeithorizont $\tau$, über den der Verlauf der Regelgrößen betrachtet wird, vorzugsweise länger als 10 Sekunden ist.

Bei einem Zeithorizont von nur 15 Sekunden und nur einer Steuergröße, die ausschließlich die Werte 0 oder 1 annehmen kann und deren Einstellung nur alle 0,5 Sekunde geändert werden kann, ergeben sich 2^30 und damit mehr als eine Milliarde mögliche zeitlichen Abfolgen der Steuergröße innerhalb dieses Zeithorizontes. Bevorzugt wird daher die Anzahl der zu berechnenden mittleren Abweichungen der Regelgrößen von den Sollwerten weiter reduziert, indem bei der Optimierung nicht alle möglichen Zeitverläufe der Steuergrößen betrachtet werden, sondern nur eine geeignet gewählte Untermenge. Die sich daraus ergebende pseudooptimale Einstellung der Steuergrößen ist die zeitliche Abfolge der Steuergrößen deren resultierende mittlere quadratische Regelabweichung nicht größer ist als irgendeine mittlere quadratische Regelabweichung, die sich aus einer anderen der Einstellungen der betrachteten Untermenge ergibt.

Bevorzugt wird als Untermenge die Menge der Einstellungen gewählt, die wenig von der optimalen oder pseudooptimalen zeitlichen Abfolge abweicht, die in einem vorherigen Optimierungsschritt berechnet worden ist.

Die modellbasierte Regelung der Temperatur des Kalibriervolumens umfasst vorzugsweise die folgenden vier Schritte, die in der angegebenen Reihenfolge periodisch wiederholt durchgeführt werden, wobei die zugehörige Periodendauer vorzugsweise kleiner als eine Sekunde ist. Im ersten Schritt wird eine Messung einer Teilmenge der aktuellen thermischen Zustandsgrößen durchgeführt. Im zweiten Schritt wird die Gesamtheit der aktuellen Zustandsgrößen auf der Basis der im ersten Schritt gemessen Werte, einer vorherigen Schätzung der Gesamtheit der Zustandsgrößen und der vorherigen Werte der Steuer- und Stellgrößen, vorzugsweise mittels eines diskreten Kalman-Filters, geschätzt. Im dritten Schritt werden die optimalen oder pseudooptimalen Werte der Steuer- und Stellgrößen, für die das zukünftige Verhalten der Regelgrößen dem angestrebten Verhalten der Regelgrößen möglichst oder ausreichend nahe kommt, vorzugsweise mittels eines zeitdiskreten thermischen Modells für die Zustandsdynamik, berechnet. Im vierten Schritt wird eine Einstellung der optimalen Werte der Steuer- und Stellgrößen für den aktuellen Zeitpunkt vorgenommen.

Besonders vorteilhaft an der modellbasierten Regelung gemäß der Erfindung ist, dass sich damit für Solltemperaturen oberhalb von 500°C zeitliche Temperaturstabilitäten erreichen lassen, die mit etwa $\pm 3$ mK um eine Größenordnung besser sind als die für diesen Temperaturbereich bisher erreichten Stabilitäten. Damit lassen sich auch im Bereich hoher Temperaturen von bis zu 700°C hochgenaue Temperaturkalibrierungen durchführen.

Ein weiterer Vorteil der modellbasierten vorausschauenden Regelung der Temperatur des Kalibriervolumens besteht darin, dass Überschwinger in der Regelgröße durch die Berechnung der Regelabweichungen an mehreren zukünftigen Zeitpunkten vermieden werden. Dadurch wird die zeitliche Stabilität der Temperatur des Kalibriervolumens schneller erreicht.

Weitere Vorteile, Merkmale und Einzelheiten ergeben sich aus der nachfolgenden Beschreibung eines Ausführungsbeispiels in Verbindung mit den Zeichnungen. Es zeigen:

Figur 1   zeigt ein thermisches Modell eines tragbaren Metallblockkalibrators mit einem metallischen Wärmeleitungsteil (2) und dem Kalibriervolumen (3), wobei sich im ersten der neun Elemente des Modells (11, 12, ..., 19) eine Wärmequelle (1), im fünften Element des Modells ein interner Referenzsensor (6), und im neunten Element des Modells ein externer Referenzsensor (7) befindet;

Figur 2   zeigt das Bode-Diagramm mit Amplitudengang (61) und Phasengang (66) der internen Übertragungsfunktion, die sich aus einem an die Amplitudenmesswerte (60) und Phasenmesswerte (65) angepassten thermischen Modell ergibt;

Figur 3   zeigt das Bode-Diagramm mit Amplitudengang (71) und Phasengang (76) der externen Übertragungsfunktion, die sich aus einem an die Amplitudenmesswerte (70) und Phasenmesswerte (75) angepassten thermischen Modell ergibt;

Figur 4   zeigt die mittels des externen Referenzsensors (7) gemessenen Temperaturwerte (77), die sich bei einer Regelung der Temperatur des Kalibriervolumens (3) eines Metallblockkalibrators auf eine Solltemperatur von 600°C unter Verwendung eines angepassten thermischen Modells ergeben.

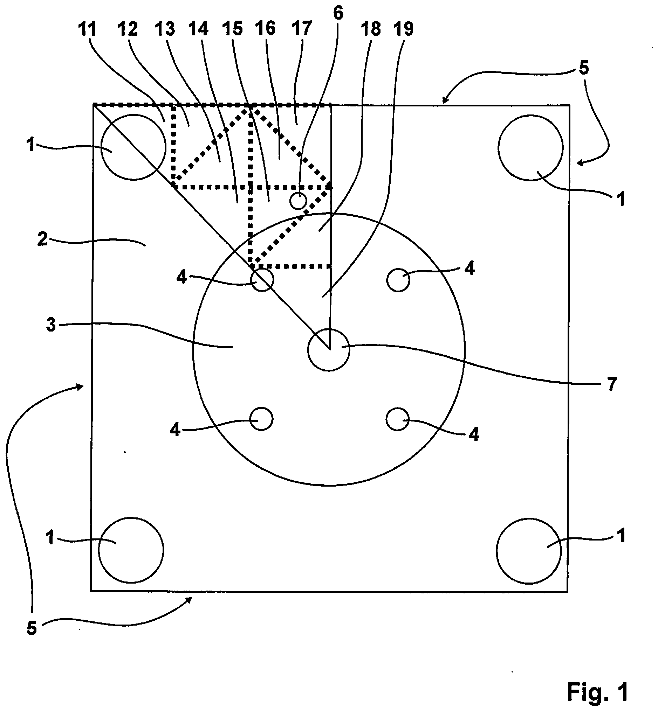

In Fig. 1 ist ein thermisches Modell eines tragbaren Metallblockkalibrators dargestellt, auf dessen Basis im Folgenden eine Regelung der Temperatur des Kalibriervolumens (3) des Metallblockkalibrators auf eine Solltemperatur ausgeführt wird. In das Kalibriervolumen (3) können verschiedene auf die zu prüfenden Temperatursensoren angepasste metallische Einsatzhülsen mit Aufnahmebohrungen (4) für die Prüflinge eingebracht werden. Die Temperatur des Kalibriervolumens (3) wird mittels eines externen Referenzsensors (7) gemessen. Als einzige Information über die Temperaturverteilung im als Metallblock ausgeführten Wärmeleitungsteil (2) steht die Anzeige des internen Referenzsensors (6) zur Verfügung. Zur Regelung der Temperatur des Kalibriervolumens (3) auf den gewünschten Sollwert können die als Heizelemente ausgeführten Wärmequellen (1) mit einer Steuerelektronik aktiviert bzw. deaktiviert werden. Die Außenseiten des Wärmeleitungsteils (2) erfüllen die Funktion einer Wärmesenke (5). Zur Modellierung der Dynamik der thermischen Zustände wird der Querschnitt des Metallblockkalibrators gedanklich in dreieckige Elemente gleicher Größe unterteilt und die Temperaturverteilung im Wärmeleitungsteil (2) und im Kalibriervolumen (3) durch die Temperaturen der einzelnen Elemente des thermischen Netzwerkes repräsentiert. Aufgrund der Symmetrie der Anordnung der als Heizelemente ausgeführten Wärmequellen (1) ist es ausreichend, nur die dargestellte dreiseitige Fläche als thermisches Netzwerk mit den neun Elementen (11, 12, ..., 19) zu modellieren, wenn man im Folgenden berücksichtigt, dass Wärmeenergie aus dem Netzwerk nur in die Wärmesenke (5) abfließen kann. Dem thermischen Netzwerk mit den neun Elementen (11, 12, ..., 19) wird nur über die Wärmequelle (1) im ersten Element (11) Wärme zugeführt.

Die zeitliche Änderung der Temperatur in einem Element ist dann durch die Gleichung

$$m_i k \frac{dT_i}{dt} = Q_i$$

gegeben. Dabei ist $m_i$ die Masse des Elementes, $k$ die spezifische Wärmekapazität des verwendeten Metalls und $Q_i$ der Wärmefluss in das Element. Dieser ergibt sich aus den Temperaturdifferenzen zu den benachbarten Elementen und den zugehörigen Wärmeübergangskoeffizienten $\alpha_{ij}$ und Kontaktflächen $L_{ij}$ gemäß der Gleichung

$$Q_i = \alpha_{ij} L_{ij} (T_j - T_i) + \alpha_{il} L_{il} (T_l - T_i) + \alpha_{in} L_{in} (T_n - T_i)\,.$$

Für den Zustandsvektor $\bar{T}(t)$ der neun Temperaturen relativ zur Umgebungstemperatur ergibt sich somit ein lineares Differenzialgleichungssystem

$$\frac{d\bar{T}(t)}{dt} = A\bar{T}(t) + Bu(t)$$

mit der Steuergröße $u(t)$ und der Matrix $B$, die den freien Parameter p in der Form

$$[p \quad 0 \quad 0 \quad 0 \quad 0 \quad 0 \quad 0 \quad 0 \quad 0]^t$$

enthält, da Wärmeenergie nur in das erste Element (11) eingebracht wird. Es wird angenommen, dass die Koeffizienten des Wärmeübergangs zwischen allen Elementen des als Metallblock ausgeführten Wärmleitungsteils (2) bzw. allen Elementen des mit der metallischen Einsatzhülse gefüllten Kalibriervolumens (3) untereinander gleich sind. Sie können sich aber sowohl vom Koeffizienten des Wärmeübergangs von Elementen im Wärmeleitungsteil (2) zur Wärmesenke (5) als auch vom Koeffizienten des Wärmeübergangs von Elementen im Wärmeleitungsteil (2) zu Elementen im Kalibriervolumen (3) unterscheiden. Wenn man darüber hinaus aufgrund der geometrischen Modellunschärfe zulässt, dass die Masse eines Elementes im Kalibriervolumen (3) um den Faktor d größer als die Masse eines Elementes im Wärmeleitungsteil (2) des Metallblockkalibrators ist, ergibt sich für die Matrix $A$ die Struktur

$$\begin{pmatrix} -a-b & b & 0 & 0 & 0 & 0 & 0 & 0 & 0 \\ b & -a-b-b\sqrt{2} & b\sqrt{2} & 0 & 0 & 0 & 0 & 0 & 0 \\ 0 & b\sqrt{2} & b(-2-\sqrt{2}) & b & 0 & b & 0 & 0 & 0 \\ 0 & 0 & b & -2b & b & 0 & 0 & 0 & 0 \\ 0 & 0 & 0 & b & -2b-c & b & 0 & c & 0 \\ 0 & 0 & b & 0 & b & b(-2-\sqrt{2}) & b\sqrt{2} & 0 & 0 \\ 0 & 0 & 0 & 0 & 0 & b\sqrt{2} & -a-b\sqrt{2} & 0 & 0 \\ 0 & 0 & 0 & 0 & \frac{c}{d} & 0 & 0 & \frac{-c-b}{d} & \frac{b}{d} \\ 0 & 0 & 0 & 0 & 0 & 0 & 0 & \frac{b}{d} & \frac{-b}{d} \end{pmatrix}$$

mit den vier freien Parametern a, b, c und d.

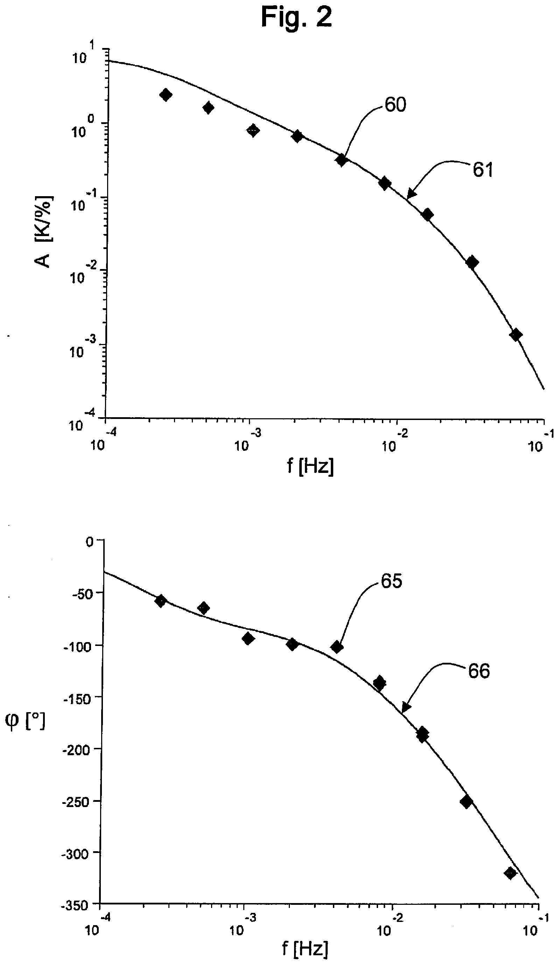

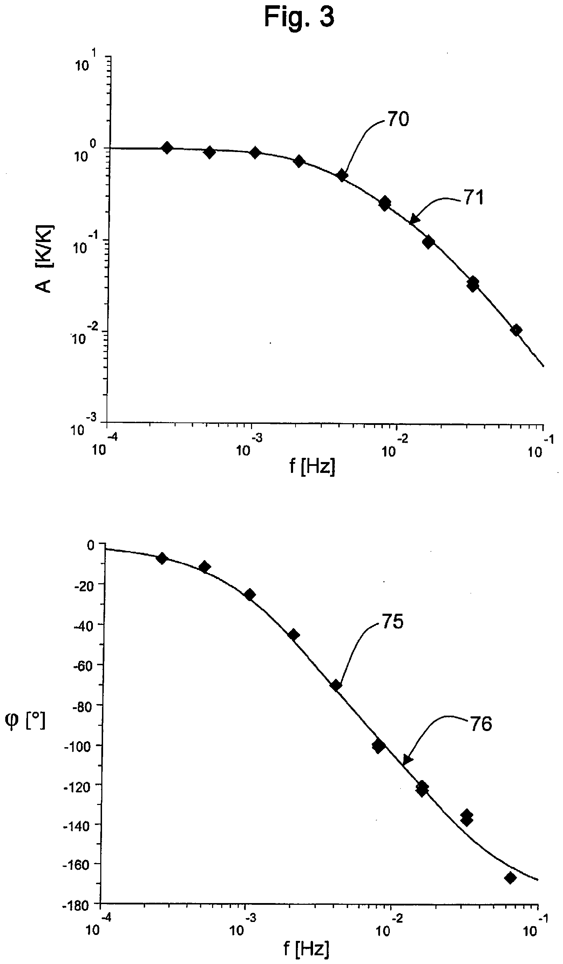

Um die insgesamt 5 freien Parameter p, a, b, c, und d des thermischen Modells zu bestimmen, werden die Amplitudenwerte (60) und die Phasenwerte (65) sowohl der internen Übertragungsfunktion, d.h. der Übertragung von der Wärmequelle (1) zur Temperatur des internen Referenzsensors (6), als auch die Amplitudenwerte (70) und die Phasenwerte (75) der externe Übertragungsfunktion, d.h. der Übertragung vom internen Referenzsensor (6) zur Temperatur des externen Referenzsensors (7), für ausgewählte Frequenzen gemessen. Anschließend werden die sich aus dem linearen Differenzialgleichungssystem für verschiedene Werte der freien Modellparameter ergebende Übertragungsfunktionen berechnet und mit den Messdaten verglichen. Bei einer Temperatur des Kalibriervolumens von 600 °C ergibt sich für p=0,11 K/s, a=0,0044 1/s, b=0,11 1/s, c=0,071 1/s und d=2,1 sowohl für das in Fig. 2 dargestellte Bode-Diagramm der internen Übertragungsfunktion mit Amplitudengang (61) und Phasengang (66) als auch für das in Fig. 3 dargestellte Bode-Diagramm der externen Übertragungsfunktion mit Amplitudengang (71) und Phasengang (76) eine gute Übereinstimmung mit den gemessenen Werten.

Um das damit als lineares Differenzialgleichungssystem mit bekannten konstanten Koeffizienten bzw. bekannten konstanten Matrizen A und *B* vorliegende thermische Modell für die Verwendung in einem diskreten Kalman-Filter geeignet umzuformulieren, wird in diesem Ausführungsbeispiel ein Zeitinkrement $\theta$ von 100 ms zur zeitdiskreten Modellierung gewählt. Aus dem in Fig. 2 dargestellten Amplitudengang (61) im Bode-Diagramm der internen Übertragungsfunktion kann geschlossen werden, dass aufgrund der großen thermischen Trägheit des Wärmleitungsteils (2) mit einer An-/Aus-Regelung der Wärmequellen (1) bei einer zugehörigen Taktrate $1/\theta$ von 10 Hz eine Auflösung der Regelung der Temperatur in der unmittelbaren Umgebung des internen Referenzsensors von deutlich besser als 1 $\mu$K erreicht werden kann.

In dem betrachteten Ausführungsbeispiel werden zur Schätzung der thermischen Zustände dem diskreten Kalman-Filter die Temperaturmesswerte sowohl des internen Referenzsensors (6) als auch des externen Referenzsensor (7) mit einer Aktualisierungsrate von ebenfalls 10 Hz zugeführt. Das $2\sigma$-Signalrauschen beider Referenzsensoren beträgt dabei etwa 4 mK.

Die Folge der zu schätzenden thermischen Zustände

$$x_n = \begin{pmatrix} \vec{T}(t_n) \\ T_U(t_n) \\ T_{Offset} \end{pmatrix}$$

umfasst neben den Temperaturen $\vec{T}(t_n)$ der neun Elemente des thermischen Netzwerkes zu den Zeitpunkten $t_n = t_{n-1}$ + 100 ms auch die zeitabhängige Umgebungstemperatur $T_U(t_n)$ und den zeitunabhängigen systematischen Offset $T_{Offset}$ zwischen den Temperaturmesswerten des internen Referenzsensors (6) und des externen Referenzsensors (7). Damit ergibt sich für die Zustände die lineare stochastische Differenzengleichung

$$x_n = F \cdot x_{n-1} + G \cdot u_{n-1} + w_{n-1} \, ,$$

wobei sich die Matrizen *F* bzw. G mit zeitlich konstanten Koeffizienten durch Integration des linearen Differenzialgleichungssystems mit den bereits ermittelten zeitlich konstanten Matrizen *A* und *B* über einen Zeitraum von $\theta$ = 100 ms mit $u(t)$ = 0 (Wärmequellen an) bzw. u(t)=1 (Wärmequellen aus) ergeben. Die Zufallsvariablen $w_n$ stellen das Systemrauschen dar und werden als normalverteilt mit Mittelwert Null und Kovarianzmatrix *Q* angenommen. Die Temperaturanzeigen der beiden Referenzen $\Theta_{In}(t_n)$ und $\Theta_{Ex}(t_n)$ ergeben sich aus der Messgleichung

$$z_n = \begin{pmatrix} \Theta_{In}(t_n) \\ \Theta_{Ex}(t_n) \end{pmatrix} = H \cdot x_n + v_n$$

mit der Messmatrix

$$H = \begin{bmatrix} 0 & 0 & 0 & 0 & 1 & 0 & 0 & 0 & 0 & 0 & 0 \\ 0 & 0 & 0 & 0 & 0 & 0 & 0 & 0 & 1 & 0 & 0 \end{bmatrix} .$$

Die Zufallsvariablen $v_n$ stellen das Messrauschen dar und werden als normalverteilt mit Mittelwert Null und Kovarianzmatrix *R* angenommen.

Die zentrale Komponente und der entscheidende Vorteil des in diesem Ausführungsbeispiel verwendeten diskreten Kalman-Filters ist es, dass neben der Schätzung eines Zustandes $\hat{x}_n$ auch immer die Unsicherheit dieser Schätzung in Form der Schätzfehler-Kovarianzmatrix $P_n$ berechnet wird. Im Vorhersageschritt für den Zeitpunkt $t_n$ werden sowohl der Schätzer für den Zustand als auch die zugehörige Kovarianzmatrix zunächst nur unter Verwendung der Schätzergebnisse für den Zeitpunkt $t_{n-1}$ gemäß der als lineare Differenzengleichung mit zeitlich konstanten Koeffizienten vorliegenden ersten Modellgleichung

$$\hat{x}_n^- = F \cdot \hat{x}_{n-1} + G \cdot u_{n-1}$$

und der zweiten Modellgleichung des Kalman-Filters

$$P_n^- = F \cdot P_{n-1} \cdot F' + Q$$

bestimmt. Im nachfolgenden Teilschritt des Kalman-Filters wird diese Vorhersage unter Berücksichtigung der zum Zeitpunkt $t_n$ gemessen Temperaturen $(\Theta_{In}, \Theta_{Ex})' = z_n$ gemäß den Korrekturgleichungen

$$\hat{x}_n = \hat{x}_n^- + K_n(z_n - H\hat{x}_n^-)$$

und

$$P_n = (I - K_n \cdot H) \cdot P_n^-$$

korrigiert. Dabei ist der sogenannte Kalman Gain durch

$$K_n = P_n^- \cdot H' \cdot (H \cdot P_n^- \cdot H' + R)^{-1}$$

gegeben.

Nach der Schätzung des aktuellen thermischen Zustandes $x_n$ im vorherigen Verfahrensschritt kann unter nochmaliger Verwendung der ersten Modellgleichung des Kalman-Filters, die als lineare Differenzengleichung mit zeitlich konstanten Koeffizienten vorliegt, für jede Bitfolge $(u_n, u_{n+1}, ..., u_{n+N})$ zukünftiger Werte (0/1) der Steuergröße $u(t)$ über den Zeithorizont $\tau = 30$ s geschätzt werden, welche zeitliche Abfolge $(\hat{T}_{Ex}(t_{n+1}), \hat{T}_{Ex}(t_{n+2}), ..., \hat{T}_{Ex}(t_{n+N+1}))$ der Temperaturanzeigen der externen Referenz (7) aus dem zugehörigen Heizleistungsprofil der Wärmequellen resultieren würde. Um eine schnelle und gleichzeitig stabile Regelung zu erreichen wird nun die Folge von Bits eingestellt, aus der eine zeitliche Abfolge resultiert, bei der innerhalb des Zeithorizontes $\tau$ die mittlere quadratische Abweichung der Temperatur der externen Referenz von der Solltemperatur möglichst klein wird.

Um innerhalb des gewählten Zeitinkrementes $\theta$ von 100 ms ein ausreichendes Ergebnis der quadratischen Optimierung in Form einer pseudooptimalen Bitfolge zu erhalten, wird die Bitfolge, die in der vorherigen Regelungsperiode als pseudooptimal berechnet worden ist, als Startfolge der Optimierung genutzt und werden durch zufälliges Invertieren einzelner Bits dieser Startfolge weitere Bitfolgen generiert, so dass eine geeignete Untermenge aller möglichen Einstellungen der Steuergröße entsteht, auf der dann die Vorhersage der Zustandsdynamik und die quadratische Optimierung durchgeführt wird.

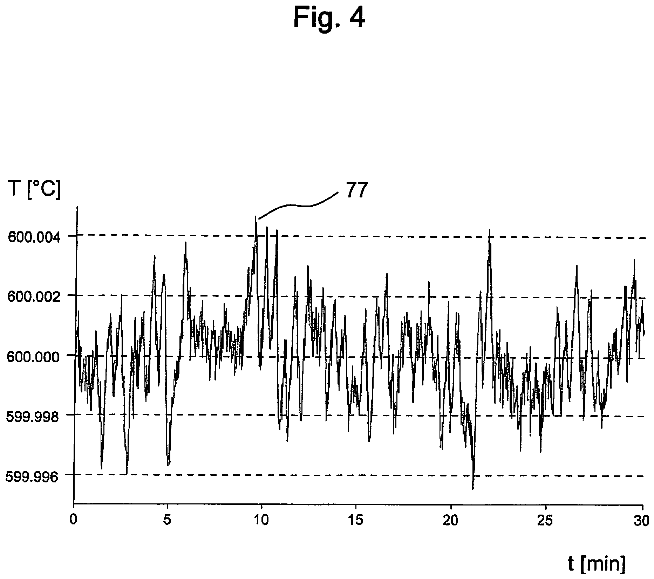

Das für den im Ausführungsbeispiel betrachten Metallblockkalibrator hergeleitete zeitdiskrete thermische Modell in Form einer lineare Differenzengleichung mit zeitlich konstanten Koeffizienten wird auf diese Weise sowohl im Verfahrensschritt zur Schätzung des thermischen Zustandes als auch im Verfahrensschritt zur Bestimmung der (pseudo-)optimalen Einstellung der Steuergröße verwendet. Diese beispielhafte Ausführung des modellbasierten Regelverfahrens ergab für eine Regelung des Kalibriervolumens (3) des im Ausführungsbeispiel modellierten Metallblockkalibrators auf eine Solltemperatur von 600 °C das in Fig. 4 dargestellte sehr stabile Regelverhalten mit einer zweifachen Standardabweichung der angezeigten Temperaturwerte (77) des externen Referenzsensors von $2\sigma \le 3$ mK.

Bezugszeichenliste:

1 Wärmequelle
2 Wärmeleitungsteil
3 Kalibriervolumen
4 Aufnahmebohrung für Prüfling
5 Wärmesenke
6 Interner Referenzsensor
7 Externer Referenzsensor

| 11 | 1. Element des Modells |
|---|---|
| 12 | 2. Element des Modells |
| 13 | 3. Element des Modells |
| 14 | 4. Element des Modells |
| 15 | 5. Element des Modells |
| 16 | 6. Element des Modells |
| 17 | 7. Element des Modells |
| 18 | 8. Element des Modells |
| 19 | 9. Element des Modells |
| 60 | Amplitudenmesswerte für die interne Übertragungsfunktion |
| 61 | Amplitudengang der internen Übertragungsfunktion |
| 65 | Phasenmesswerte für die interne Übertragungsfunktion |
| 66 | Phasengang der internen Übertragungsfunktion |
| 70 | Amplitudenmesswerte für die externe Übertragungsfunktion |
| 71 | Amplitudengang der externen Übertragungsfunktion |
| 75 | Phasenmesswerte für die externe Übertragungsfunktion |
| 76 | Phasengang der externen Übertragungsfunktion |
| 77 | Angezeigte Temperaturwerte des externen Referenzsensors |

**Patentansprüche**

1. Verfahren zur Regelung der Temperatur des Kalibriervolumens einer Einrichtung zum vergleichenden Kalibrieren von Temperatursensoren auf eine Solltemperatur, wobei die genannte Kalibriereinrichtung Wärmequellen und/oder Wärmesenken aufweist, die über ein Wärmeleitungsteil oder mehrere Wärmeleitungsteile in thermischem Kontakt mit dem Kalibriervolumen stehen,
wobei in mindestens einem Verfahrensschritt der wahre thermische Zustand des Kalibrators und der Umgebung unter Verwendung eines Kalman-Filters geschätzt wird, wobei dem Kalman-Filter die Messwerte mehrerer der sich in der genannten Kalibriereinrichtung befindlichen Temperatursensoren zugeführt werden und in mindestens einem weiteren Verfahrensschritt ein zukünftiger thermischer Zustand unter Verwendung eines thermischen Modells der Zustandsdynamik berechnet wird,
**dadurch gekennzeichnet,**
**dass** in mindestens einem Verfahrensschritt aus der genannten Schätzung des wahren thermischen Zustands und unter Verwendung eines zeitdiskreten Modells der Zustandsdynamik für mindestens zwei Einstellungen der Steuer- und Stellgrößen über einen zukünftigen Zeitraum die daraus in dem genannten Zeitraum resultierende mittlere quadratische Abweichung mindestens einer Temperatur innerhalb des Kalibriervolumens von der Solltemperatur berechnet wird, wobei der thermische Zustand mindestens eine Differenz der systematischen Abweichung der Temperaturmesswerte eines ersten Temperatursensors zur systematischen Abweichung der Temperaturmesswerte eines zweiten Temperatursensors umfasst.

2. Verfahren nach Anspruch 1,
**dadurch gekennzeichnet,**
**dass** das Modell der Zustandsdynamik ein zeitdiskretes Modell ist und die Vorschrift zur Berechnung eines thermischen Zustandes eine lineare Differenzengleichung mit zeitlich konstanten Koeffizienten ist und die zeitlich konstanten Koeffizienten abhängig von der Solltemperatur sind.

3. Verfahren nach einem der voranstehenden Ansprüche,
**dadurch gekennzeichnet,**
**dass** der thermische Zustand

- Temperaturen und/oder Wärmeströme und/oder zeitliche Änderungen von Temperaturen
- innerhalb des Kalibriervolumens und/oder innerhalb von Wärmeleitungsteilen und/oder oder in der Umgebung der genannten Kalibriereinrichtung umfasst.

4. Verfahren nach einem der voranstehenden Ansprüche,
**dadurch gekennzeichnet,**
**dass** die mindestens eine Differenz der systematischen Abweichung der Temperaturmesswerte eines zu kalibrierenden Temperatursensors zur systematischen Abweichung der Temperaturmesswerte eines Bezugsnormals berechnet wird.

**5.** Vorrichtung zur Regelung der Temperatur eines Kalibriervolumens einer Einrichtung zum vergleichenden Kalibrieren von Temperatursensoren auf eine Solltemperatur, wobei die Vorrichtung mindestens aus einer elektronischen Datenverarbeitungseinheit besteht, die über eine Schnittstelle Messdaten mindestens eines in der Kalibriereinrichtung befindlichen Temperatursensors empfangen kann,
**dadurch gekennzeichnet,**
**dass** auf der genannten elektronischen Datenverarbeitungseinheit ein thermisches Modell der Dynamik thermischer Zustände implementiert ist, wobei der thermische Zustand mindestens eine Differenz der systematischen Abweichung der Temperaturmesswerte eines ersten Temperatursensors zur systematischen Abweichung der Temperaturmesswerte eines zweiten Temperatursensors umfasst. wobei diese Datenverarbeitungseinheit aus empfangenen Messdaten und unter Verwendung eines Kalman-Filters den wahren thermischen Zustand der Kalibriereinrichtung schätzt.

**6.** Vorrichtung nach Anspruch 5,
**dadurch gekennzeichnet,**
**dass** die elektronische Datenverarbeitungseinheit ein Mikrocontroller ist.

**7.** Vorrichtung nach Anspruch 5 oder 6,
**dadurch gekennzeichnet,**
**dass** das Modell der Zustandsdynamik ein zeitdiskretes Modell ist und die Vorschrift zur Berechnung eines thermischen Zustandes eine lineare Differenzengleichung mit zeitlich konstanten Koeffizienten ist und die zeitlich konstanten Koeffizienten abhängig von der Solltemperatur sind.

**8.** Vorrichtung nach Anspruch 7,
**dadurch gekennzeichnet,**
**dass** die zeitlich konstanten Koeffizienten in einem nichtflüchtigen Speicher gespeichert werden.

**9.** Vorrichtung nach einem der Ansprüche 5 bis 8,
**dadurch gekennzeichnet,**
**dass** die Gesamtheit oder Komponenten des geschätzten thermischen Zustandes durch eine Schnittstelle ausgegeben werden.

**10.** Vorrichtung nach einem der Ansprüche 5 bis 9,
**dadurch gekennzeichnet,**
**dass** aus der genannten Schätzung des wahren thermischen Zustandes und unter Verwendung des zeitdiskreten Modells der Zustandsdynamik für mindestens zwei mögliche Einstellungen der Steuer- und Stellgrößen der Kalibriereinrichtung über einen Zeitraum die daraus in dem genannten Zeitraum resultierende mittlere quadratische Abweichung mindestens einer Temperatur innerhalb des Kalibriervolumens von der Solltemperatur berechnet wird und über eine Schnittstelle die Einstellung ausgegeben wird, für die die berechnete mittlere quadratische Abweichung von der Solltemperatur am kleinsten ist und die entsprechenden Stellgrößen oder Steuergrößen eingestellt werden.

**Claims**

**1.** A method for controlling the temperature of the calibration volume of an apparatus for comparative calibration of temperature sensors to a target temperature, wherein said calibration apparatus comprises heat sources and/or heat sinks, which are in thermal contact with the calibration volume through one or more heat conducting parts wherein, in at least one process step, the true thermal state of the calibrator and its environment is estimated using a Kalman filter, wherein the Kalman filter is supplied with measured values from several of the temperature sensor disposed in said calibration apparatus; and, in at least one further method step, a future thermal state is calculated using a thermal model of dynamics of thermal states,
**characterized in that**
based on said estimate of the true thermal state and using a discrete-time model of the dynamics of states for at least two settings of the control and manipulated variables in a future period of time, the mean square deviation of at least one temperature within the calibration volume from the target temperature resulting therefrom in said time period is calculated in at least one process step, wherein the thermal state includes at least a difference between the systematic deviation of the temperature measurement values of a first temperature sensor and the systematic deviation of the temperature measurement values of a second temperature sensor.

2. The method according to claim 1,
**characterized in that**
the model of the dynamics of the thermal states is a discrete-time model and the rule for calculating a thermal state is a linear difference equation with time-constant coefficients and the time-constant coefficients are dependent on the target temperature.

3. The method according to one of the afore-mentioned claims,
**characterized in that**
the thermal state includes :

  - temperature and/or heat flows and/or temporal changes of temperatures
  - within the calibration volume and/or within heat conducting parts and/or in the environment of said calibration apparatus.

4. The method according to one of the afore-mentioned claims,
**characterized in that**
the at least one difference between the systematic deviation of the temperature measurement values of a temperature sensor to be calibrated and the systematic deviation of the temperature measurement values of a reference standard is calculated.

5. A device for controlling the temperature of a calibration volume of an apparatus for comparative calibration of temperature sensors to a target temperature, wherein the device consists of at least one electronic data processing unit that receives measurement data from at least one temperature sensor located in the calibration apparatus via an interface,
**characterized in that**
said electronic data processing unit implements a thermal model of dynamics of thermal states, wherein the thermal state includes at least one difference between the systematic deviation of the temperature measurement values of a first temperature sensor and the systematic deviation of the temperature measurement values of a second temperature sensor, wherein this data processing unit estimates the true thermal state of the calibration apparatus based on the received measurement data and using a Kalman filter.

6. The device according to claim 5,
**characterized in that**
the electronic data processing device is a microcontroller.

7. The device according to claim 5 or 6,
**characterized in that**
the model of the dynamics of the thermal states is a discrete-time model and the rule for calculating a thermal state is a linear difference equation with time constant coefficients and the time constant coefficients are dependent on the target temperature.

8. The device according to claim 7,
**characterized in that**
the time constant coefficients are stored in a non-volatile memory.

9. The device according to claim 5 to 8,
**characterized in that**
the whole or components of the estimates of the true thermal state is output through an interface.

10. The device according to one of the claims 5 to 9,
**characterized in that**
based on said estimate of the true thermal state and using a discrete-time model of the dynamics of states for at least two possible settings of the control and manipulated variables of the calibration apparatus in a period of time, the mean square deviation of at least one temperature within the calibration volume from the target temperature resulting therefrom in said time period is calculated and the setting for which the calculated mean square deviation from the target temperature is the smallest is output through an interface and the corresponding manipulated variable or control variable are set.

**Revendications**

1. Procédé de réglage de la température du volume d'étalonnage d'un dispositif pour l'étalonnage comparatif de capteurs de température par rapport à une température prescrite, où le dispositif d'étalonnage comprend des sources thermiques et/ou des dissipateurs thermiques qui sont en contact thermique avec le volume d'étalonnage via une pièce conductrice de chaleur ou plusieurs pièces conductrices de chaleur,
où, lors d'au moins une étape du procédé, le vrai état thermique de l'étalonneur et de son environnement est estimé en utilisant un filtre de Kalman, où les valeurs de mesure de plusieurs capteurs de température se trouvant dans ledit dispositif d'étalonnage sont fournies au filtre de Kalman et, lors d'au moins une autre étape du procédé, un état thermique futur est calculé en utilisant un modèle thermique de la dynamique des états,
**caractérisé en ce que**
lors d'au moins une étape de procédé, l'erreur quadratique moyenne d'au moins une température à l'intérieur du volume d'étalonnage par rapport à la température prescrite dans une période de temps future résultant de ladite estimation du vrai état thermique est calculée en utilisant un modèle discret dans le temps de la dynamique des états pour au moins deux réglages des grandeurs de contrôle et grandeurs de commande dans ladite période de temps, où l'état thermique comprend au moins une différence entre l'erreur systématique des valeurs de température mesurées d'un premier capteur de température et l'erreur systématique des valeurs de température mesurées d'un second capteur de température.

2. Procédé selon la revendication 1,
**caractérisé en ce que**
le modèle de la dynamique des états est un modèle discret dans le temps et la consigne pour calculer un état thermique est une équation différentielle linéaire avec des coefficients constants dans le temps et les coefficients constants dans le temps dépendent de la température prescrite.

3. Procédé selon l'une des revendications précédentes,
**caractérisé en ce que**
l'état thermique comprend :

- des températures et/ou des courants thermiques et/ou des changements de températures
- à l'intérieur du volume d'étalonnage et/ou à l'intérieur de pièces conductrices de chaleur et/ou dans l'environnement dudit dispositif d'étalonnage.

4. Procédé selon l'une des revendications précédentes,
**caractérisé en ce que**
l'au moins une différence entre l'erreur systématique des valeurs de température mesurées d'un capteur de température à étalonner et l'erreur systématique des valeurs de température mesurées d'un étalon de référence est calculée.

5. Dispositif de réglage de la température d'un volume d'étalonnage d'un dispositif pour l'étalonnage comparatif de capteurs de température par rapport à une température prescrite, où le dispositif consiste en au moins une unité de traitement de données électronique qui peut recevoir des données de mesure d'au moins un capteur de température se trouvant dans le dispositif d'étalonnage via une interface,
**caractérisé en ce que**
un modèle thermique de la dynamique d'états thermiques est implémenté dans ladite unité de traitement de données électroniques, où l'état thermique comprend au moins une différence entre l'erreur systématique des valeurs de température mesurées d'un premier capteur de température et l'erreur systématique des valeurs de température mesurées d'un second capteur de température, où cette unité de traitement de données estime le vrai état thermique du dispositif d'étalonnage à partir de données de mesure reçues et en utilisant un filtre de Kalman.

6. Dispositif selon la revendication 5,
**caractérisé en ce que**
l'unité de traitement de données électronique est un microcontrôleur.

7. Dispositif selon la revendication 5 ou 6,

**caractérisé en ce que**
le modèle de la dynamique des états est un modèle discret dans le temps et la consigne pour calculer un état thermique est une équation différentielle linéaire avec des coefficients constants dans le temps et les coefficients constants dans le temps dépendent de la température prescrite.

8. Dispositif selon la revendication 7,
**caractérisé en ce que**
les coefficients constants dans le temps sont stockés dans une mémoire non volatile.

9. Dispositif selon l'une des revendications 5 à 8,
**caractérisé en ce que**
la totalité ou des composantes de l'état thermique estimé sont sortis via une interface.

10. Dispositif selon l'une des revendications 5 à 9,
**caractérisé en ce que**
l'erreur quadratique moyenne d'au moins une température à l'intérieur du volume d'étalonnage par rapport à la température prescrite dans une période de temps résultant de ladite estimation du vrai état thermique est calculée en utilisant un modèle discret dans le temps de la dynamique des états pour au moins deux réglages des grandeurs de contrôle et grandeurs de commande dans ladite période de temps et le réglage pour lequel l'erreur quadratique moyenne calculée par rapport à la température prescrite est la plus petite et les grandeurs de contrôle ou grandeurs de commande sont sorties via une interface.

Fig. 1

## Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3939687 A
- DE 202005006710 U1
- DE 2023130 B
- WO 2013113683 A2
- KR 100991021 B1
- WO 2011100736 A2
- DE 20317566 U1

**In der Beschreibung aufgeführte Nicht-Patentliteratur**

- **L. F. MOUZINHO ; J. V. FONSECANETO ; B. A. LUCIANO ; R. C. S. FREIRE.** INDIRECT MEASUREMENT OF THE TEMPERATURE VIA KALMAN FILTER. *XVIII IMEKO World Congress, Metrology for a Sustainable Development,* 17. September 2006